# EUROPÄISCHE PATENTSCHRIFT

(11) **EP 2 577 113 B1**
(45) Veröffentlichungstag und Bekanntmachung des Hinweises auf die Patenterteilung: **23.07.2014**
(21) Anmeldenummer: 11719814.3
(22) Anmeldetag: 13.05.2011
(51) Int. Cl.: F16H 63/34, F16H 59/10

(54) **SHIFT-BY-WIRE-SCHALTVORRICHTUNG MIT MECHANISCHER PARKSPERRENBETÄTIGUNG**
SHIFT-BY-WIRE SHIFTING DEVICE HAVING MECHANICAL PARKING LOCK ACTUATION
DISPOSITIF DE CHANGEMENT DE VITESSE DE TYPE SHIFT-BY-WIRE AVEC ACTIONNEMENT MÉCANIQUE DU FREIN DE STATIONNEMENT

(30) Priorität: 04.06.2010 DE 102010029704
(43) Veröffentlichungstag der Anmeldung: 10.04.2013
(73) Patentinhaber: ZF Friedrichshafen AG, 88038 Friedrichshafen (DE)
(72) Erfinder: GIEFER, Andreas, 49448 Lemfoerde (DE); RAKE, Ludger, 49439 Steinfeld (DE)
(86) Internationale Anmeldenummer: PCT/EP2011/057734
(87) Internationale Veröffentlichungsnummer: WO 2011/151149

(56) Entgegenhaltungen:
- DE-A1- 10 125 526
- DE-A1- 10 326 118
- DE-B3-102008 028 614

## Beschreibung

Die Erfindung betrifft eine Betätigungseinrichtung zur Auswahl von Schaltstufen eines shift-by-wire- gesteuerten Fahrzeuggetriebes mit einem selektiv betätigten mechanischen Übertragungsmittel zur Parksperrenbetätigung, gemäß dem Oberbegriff von Patentanspruch 1.

Parksperren werden immer dann eingesetzt, wenn bei der Antriebskraftübertragung im Kraftfahrzeug nicht-mechanische Komponenten Verwendung finden - beispielsweise bei automatischen Getrieben mit hydrodynamischem Drehmomentwandler - wenn also auch bei eingelegtem Gang im Getriebe nicht zwangsläufig ein durchgehender mechanischer Kraft- bzw. Formschluss zwischen dem Fahrzeugmotor und den Rädern des Kraftfahrzeugs gegeben ist.

Kraftfahrzeuge mit Automatikgetriebe erhalten demzufolge üblicherweise eine Parksperre, um ein unbeabsichtigtes Wegrollen des Fahrzeugs bei Fahrzeugstillstand und abgestelltem Motor zu unterbinden.

Um die konstruktiven Gestaltungsmöglichkeiten bezüglich der freien Anordnung der Betätigungsvorrichtung in der Fahrgastzelle zu verbessern, und um eine bessere akustische Entkopplung der Betätigungsvorrichtung vom Antriebsstrang des Kraftfahrzeuges zu gewährleisten, wird bei modernen Kraftfahrzeugen bzw. Getriebeautomaten zunehmend zum shift-by-wire Prinzip übergegangen, auch zumal moderne Getriebeautomaten oder Fahrzeuggetriebe zunehmend vollelektronisch gesteuert werden.

Bei derartigen "shift-by-wire"-Getrieben erfolgt die Übertragung der Schaltbefehle von der Betätigungseinrichtung bzw. vom Wählhebel des Getriebeautomaten somit im Regelfall ausschließlich mittels elektrischer oder elektronischer Signale. Bezüglich der Parksperre bedeutet dies mit anderen Worten, dass ggf. auch die Betätigung der Parksperre auf elektrischem bzw. elektronischem Weg erfolgt. Unter Umständen kann eine Betätigung der Parksperre sogar automatisch vorgesehen sein, beispielsweise im Fall von "Auto-P", also im Fall des selbsttätigen Einlegens der Parksperre beim Abziehen des Zündschlüssels bzw. Verlassen des Kraftfahrzeugs.

Unabhängig davon, ob es sich bei der Getriebebetätigung um eine nichtmechanische, auf dem shift-by-wire Prinzip basierende Betätigung, oder um eine im Wesentlichen konventionelle, mechanische Getriebebetätigung handelt, besteht häufig die grundsätzliche Anforderung, die Getriebeparksperre in jedem Fall auch noch beim Ausfall elektronischer Systeme - oder generell beim Ausfall der elektrischen Spannungsversorgung des Kraftfahrzeugs - auf rein mechanischem Wege zu betätigen, insbesondere ausrücken zu können, um das Fahrzeug auch in solchen Fällen noch bewegen zu können. Dies kommt beispielsweise in Betracht beim Werkstattaufenthalt des Fahrzeugs oder auch beim Abschleppen im Fall eines Defekts.

Hierzu sind Betätigungseinrichtungen für shift-by-wiregesteuerte Getriebe bekannt, bei denen eine zusätzliche mechanische Verbindung zwischen dem Wählhebel und dem Getriebe vorhanden ist, beispielsweise ein Gestänge oder ein Seilzug. Auf diese Weise kann die Parksperre in jedem Fall, auch beim vollständigen Ausfall der elektrischen Systeme zur Getriebebetätigung, mechanisch über den Seilzug betätigt werden, so dass das Fahrzeug auch in diesem Fall noch bewegt, wie auch wieder gesichert abgestellt werden kann.

Um hierbei den Betätigungsweg des Seilzugs zwischen Betätigungseinrichtung und Getriebe zu minimieren, um unnötigen Verschleiß der mechanischen Parksperrenbetätigung zu vermeiden und um durch die mechanische Parksperrenbetätigung verursachte Schleppkräfte bei der Betätigung des Wählhebels so gering wie möglich zu halten, sind Betätigungseinrichtungen entwickelt worden, bei denen der Seilzug zur mechanischen Betätigung der Parksperre selektiv nur dann bewegt wird, wenn der Wählhebel tatsächlich in die Parksperrenstellung hinein bzw. aus der Parksperrenstellung heraus geschaltet wird. Hingegen ist die mechanische Parksperrenbetätigung bei sonstigen Bewegungen des Wählhebels zwischen den einzelnen Fahrstufen bzw. Schaltgassen - mittels entsprechender Ausbildung der Übertragungsmechanik in der Betätigungseinrichtung - vom Wählhebel entkoppelt. Auf diese Weise können die sonstigen Wählhebelbewegungen leichtgängig und ohne Rückwirkung der Reibungskräfte aus der mechanischen Parksperrenbetätigung auf den Wählhebel erfolgen.

Eine derartige, gattungsgemäße Betätigungseinrichtung ist beispielsweise aus der Druckschrift DE 103 26 118 B4 bekannt. Diese bekannte Betätigungseinrichtung umfasst einen entlang einer Schaltgasse bewegbaren Wählhebel sowie einen Seilzug als mechanisches Übertragungsmittel zur Betätigung der Parksperre. Ferner weist diese bekannte Betätigungseinrichtung eine Übertragungsmechanik mit einer Mehrfachgelenk-Verbindung in Form von miteinander gekoppelten Übertragungselementen auf, wobei die Mehrfachgelenk-Verbindung - nur für den Fall der Bewegung des Wählhebels in die Parksperrenstellung bzw. aus der Parksperrenstellung heraus - den Seilzug zur Parksperre betätigt.

Diese aus dem Stand der Technik bekannte Betätigungseinrichtung ist jedoch konstruktiv und in der Montage vergleichsweise aufwändig, insbesondere da die Mehrfachgelenk-Verbindung bei dieser Betätigungseinrichtung eine Mehrzahl von Übertragungselementen aufweist, welche wiederum mit einer am Wählhebel angeordneten Steuerplatte in Eingriff zu bringen sind.

Ferner kann es bei dieser aus dem Stand der Technik bekannten Betätigungseinrichtung auch zu Klappergeräuschen kommen, wenn die vergleichsweise zahlreichen Bestandteile der dort verwendeten Mehrfachgelenk-Verbindung nicht völlig spielfrei ineinander sowie in die Steuerplatte am Wählhebel eingreifen. Zudem addieren sich die jeweiligen Bauteiltoleranzen bzw. das jeweilige Spiel zwischen den diversen aneinander angrenzenden Übertragungselementen, weshalb die Bauteile bei dieser bekannten Betätigungseinrichtung besonders exakt gefertigt und montiert werden müssen. Schließlich eignet sich die aus diesem Stand der Technik bekannte Betätigungseinrichtung zudem nur bedingt für gezogen betätigte Übertragungsmittel wie beispielsweise einfachwirkende Seilzüge und dergleichen.

Mit diesem Hintergrund ist es Aufgabe der vorliegenden Erfindung, eine Betätigungseinrichtung zu schaffen, mit der die Übertragungsmechanik zur selektiven Betätigung des Übertragungsmittels zur Parksperre (also nur beim Schalten aus der bzw. in die Wählhebelstellung "P") konstruktiv sowie bezüglich der Montage vereinfacht werden kann, wobei gleichzeitig eine leichtgängige, zuverlässige und geräuscharme Betätigung gewährleistet werden soll. Ferner sollen Kosteneinsparungspotenziale gegenüber den aus dem Stand der Technik bekannten, konstruktiv aufwändigeren Lösungen eröffnet werden.

Diese Aufgabe wird durch eine Betätigungseinrichtung gemäß Patentanspruch 1 gelöst. Bevorzugte Ausführungsformen sind Gegenstand der Unteransprüche.

In für sich genommen zunächst bekannter Weise dient die Betätigungseinrichtung gemäß der vorliegenden Erfindung der Auswahl von Schaltstufen und der Erzeugung der zugehörigen Schaltbefehle bei einem shift-by-wire gesteuerten Getriebe, beispielsweise Automatikgetriebe eines Kraftfahrzeugs. Hierzu weist die Betätigungseinrichtung in für sich genommen ebenfalls bekannter Weise ein entlang zumindest einer Schaltgasse zwischen zumindest einer, vorzugsweise mehreren Fahrstufenstellungen und einer Parksperrenstellung bewegbares Betätigungselement auf, beispielsweise einen Wählhebel. Ferner umfasst die Betätigungseinrichtung eine Koppeleinrichtung zwischen Betätigungselement und Übertragungsmittel. Eine Betätigung des Übertragungsmittels erfolgt dabei durch die Koppeleinrichtung nur für den Fall der An- bzw. Abwahl der Parksperrenstellung mittels des Betätigungselements, während bei sonstigen Bewegungen des Betätigungselements, beispielsweise Wählhebels, keine Betätigung des Übertragungsmittels erfolgt.

Erfindungsgemäß zeichnet sich die Betätigungseinrichtung dadurch aus, dass die Koppeleinrichtung eine im Wesentlichen prismatische Gleitführung mit einer Rastvertiefung sowie einen in der Gleitführung verschieblich gelagerten Koppelschlitten umfasst, wobei der Koppelschlitten zweigeteilt ist und einen betätigungsseitigen sowie einen übertragungsmittelseitigen Schlittenteil aufweist. In der Koppelstellung überlappen der betätigungsseitige Schlittenteil und der übertragungsmittelseitige Schlittenteil einander - entlang der Richtung der Gleitführung - innerhalb eines beiden Schlittenteilen in der Koppelstellung gemeinsamen Überlappungsabschnitts.

Ferner ist im übertragungsmittelseitigen Schlittenteil (im Bereich des an der Gleitführung anliegenden Überlappungsabschnitts) ein quer zur Gleitführungsrichtung beweglich gelagertes Riegelelement zur selektiven gegenseitigen Verriegelung der beiden Schlittenelemente angeordnet. Das Riegelelement tastet bei Bewegungen des Koppelschlittens - bzw. bei Bewegungen des übertragungsmittelseitigen Schlittenteils - die Gleitführung und die darin angeordnete Rastvertiefung ab. Je nach Position des Koppelschlittens in der Gleitführung gleitet das Riegelelement damit entlang der Oberfläche der Gleitführung, oder fährt - unter Änderung seiner Relativposition im Koppelschlitten - in die Rastvertiefung ein.

Durch diese Abtastung der Gleitführung und der darin angeordneten Rastvertiefung lässt sich das Riegelelement bei entsprechender Bewegung des Koppelschlittens - bzw. des übertragungsmittelseitigen Schlittenteils - aus einer ersten Relativposition im Koppelschlitten in eine zweite Relativposition bewegen.

Dabei sind die beiden Schlittenteile in der ersten Relativposition des Riegelelements mittels Eingriffs des im übertragungsmittelseitigen Schlittenteil gelagerten Riegelelements auch in das betätigungsseitige Schlittenteil starr miteinander gekoppelt, während der Eingriff des Riegelelements in das betätigungsseitige Schlittenteil - und damit die Kopplung der beiden Schlittenteile - in der zweiten Relativposition des Riegelelements (relativ zum Koppelschlitten bzw. zum übertragungsmittelseitigen Schlittenteil) aufgehoben ist.

Die zweite Relativposition des Riegelelements, in welcher das Riegelelement in die Rastvertiefung eingefahren ist, ist dabei durch geeignete Formgebung von Riegelelement und/oder Rastvertiefung nicht selbsthemmend ausgeführt, so dass das Riegelelement durch entsprechende gegenläufige Bewegung des Koppelschlittens wieder aus der Rastvertiefung verdrängt werden kann.

Dies bedeutet mit anderen Worten, dass die Position des Riegelelements und damit der Kopplungszustand der beiden Schlittenteile durch die Bewegung des Koppelschlittens - bzw. des übertragungsmittelseitigen Schlittenteils mit dem darin gelagerten Riegelelement - so geführt bzw. gesteuert wird (mittels Abtastung der Gleitführung und der darin angeordneten Rastvertiefung durch das daran entlang gleitende Riegelelement), dass sich - in Abhängigkeit der axialen Position des Koppelschlittens in der Gleitführung - entweder eine Kopplung oder eine Entkopplung der beiden Schlittenteile ergibt.

Diese erfindungsgemäße Auslegung der Koppeleinrichtung kann nun zur selektiven Betätigung des Übertragungsmittels zwischen Betätigungseinrichtung und Fahrzeuggetriebe bzw. Parksperrenklinke herangezogen werden dergestalt, dass eine Betätigung und damit Bewegung des Übertragungsmittels (beispielsweise eines Seilzugs) nur dann erfolgt, wenn das Betätigungselement, beispielsweise der Automatikwählhebel, aus der Parksperrenstellung heraus oder in die Parksperrenstellung hinein bewegt wird, während das Übertragungsmittel bzw. der Seilzug von den sonstigen Bewegungen des Betätigungselements bzw. Wählhebels entkoppelt ist. Die Wählhebelbewegungen außerhalb des Bereichs der Parksperrenstellung, insbesondere zwischen den weiteren Wählhebelstellungen wie beispielsweise R, N, D usw. werden somit wie vorgesehen lediglich durch die elektronische Sensorik der Betätigungseinrichtung registriert und ans Getriebe übertragen, während der Seilzug sowie die Mechanik der Parksperrenbetätigung im Getriebe hierbei stillstehen.

Gemäß einer besonders bevorzugten Ausführungsform der Erfindung fixiert das Riegelelement dabei in seiner zweiten Relativposition - mittels seines in diesem Fall vorhandenen Eingriffs in die Rastvertiefung der Gleitführung - das übertragungsmittelseitige Schlittenteil relativ zur Gleitführung entlang der axialen Richtung. Dies bedeutet mit anderen Worten, dass das übertragungsmittelseitige Schlittenteil - zusammen mit dem Übertragungsmittel selbst - im getrennten Zustand der beiden Schlittenteile durch das Riegelelement relativ zur Gleitführung fixiert ist. Hierdurch bleibt somit auch die durch das Übertragungsmittel ausgelegte Parksperre solange sicher deaktiviert, bis die beiden Schlittenteile mittels entsprechender Bewegung des Betätigungselements bzw. Wählhebels wieder zusammengeführt und miteinander gekoppelt werden, wonach wiederum die Aktivierung der Parksperre über die mechanische Kraftübertragungskette "Wählhebel, gekoppelte Schlittenteile und Übertragungsmittel" erfolgen kann.

Vorzugsweise ist dabei das Riegelelement durch eine Oberfläche des betätigungsseitigen Schlittenteils in seiner zweiten Relativposition blockiert, solange sich die beiden Schlittenteile in einer nicht aneinander gekoppelten, sondern bezüglich ihrer Koppelstellung voneinander entfernten Relativstellung befinden.

Dies bedeutet mit anderen Worten, dass das Riegelelement in seiner zweiten Relativposition, in welcher es in die Rastvertiefung der Gleitführung eingreift und so die den übertragungsmittelseitigen Schlittenteil relativ zur Gleitführung verriegelt, durch eine Oberfläche des betätigungsseitigen Schlittenteils in dieser zweiten Relativposition formschlüssig fixiert ist, solange sich die beiden Schlittenteile nicht in der Koppelstellung befinden.

Gemäß einer möglichen Ausführungsform der Erfindung ist das Riegelelement dabei in seiner einfachsten Form als im Wesentlichen zylindrischer Stift ausgebildet. Dementsprechend kann das Riegelelement in einer ebenso einfachen zylindrischen Bohrung im übertragungsmittelseitigen Schlittenteil angeordnet und beweglich geführt werden, was insgesamt einer kostengünstigen Herstellung der erfindungsgemäßen Betätigungseinrichtung zugute kommt.

Gemäß einer bevorzugten Ausführungsform der Erfindung ist das Riegelelement in Richtung auf die Oberfläche der Gleitführung federbelastet. Auf diese Weise kann die zuverlässige Anlage des Riegelelements an der Oberfläche der Gleitführung und das Einfahren des Riegelelementes in die Rastvertiefung der Gleitführung - beim Erreichen der entsprechenden Relativposition des Koppelschlittens in der Gleitführung - sichergestellt werden.

Die zur Rückführung des Riegelelements aus seiner zweiten in seine erste Relativposition erforderliche nicht selbsthemmende Ausbildung der zweiten Relativposition kann gemäß weiterer Ausführungsformen der Erfindung insbesondere in der Form gestaltet sein, dass entweder das Riegelelement im Bereich seines in die Rastvertiefung eingreifenden Endes, oder die Rastvertiefung selbst (oder sowohl das Riegelelement als auch die Rastvertiefung) auf der dem Übertragungsmittel zugewandten Seite eine Abschrägung aufweist. Auf diese Weise wird das in seiner zweiten Relativposition in der Rastvertiefung befindliche Riegelelement bei einer Bewegung des übertragungsmittelseitigen Schlittenteils - mit dem darin gelagerten Riegelelement - in Richtung auf das Übertragungsmittel (aufgrund der Abschrägung bzw. der Abschrägungen) wieder aus der Rastvertiefung verdrängt und somit in seine erste Relativposition zurückgeführt. Eine nicht selbsthemmende Ausführung der zweiten Relativposition des Riegelelements ist Voraussetzung für die Wirksamkeit der erfindungsgemäßen Koppeleinrichtung nicht nur bezüglich der Entkopplung, sondern auch bezüglich der Wieder-Zusammenkopplung der beiden Schlittenteile des Koppelschlittens.

Gemäß einer weiteren Ausführungsform der Erfindung besitzt das Riegelelement und/oder die Koppelausnehmung des betätigungsseitigen Schlittenteils auch im Bereich des in die Koppelausnehmung des betätigungsseitigen Schlittenteils eingreifenden Endes des Riegelelements eine Abschrägung. Diese Abschrägung dient zur Unterstützung der Bewegung des Riegelelements aus seiner ersten in seine zweite Relativposition. Auf diese Weise wird die Verbringung des Riegelelements aus seiner ersten Relativposition, in der die beiden Schlittenteile miteinander gekoppelt sind, in seine zweite Relativposition, in der die bei Schlittenteile voneinander entkoppelt sind, erleichtert bzw. aktiv unterstützt. Gegebenenfalls kann ein ansonsten notwendiges Federelement zur Bewegung des Riegelelements aus dessen erster in dessen zweite Relativposition dank dieser Ausführungsform entfallen.

Die Erfindung lässt sich prinzipiell unabhängig von der Art und konstruktiven Ausführung des Übertragungsmittels verwirklichen, und ist damit insbesondere auch für starre Übertragungsmittel wie beispielsweise Gestänge, ebenso wie für doppeltwirkende Seilzüge wie beispielsweise Zug-/Druckdrahtzüge einsetzbar.

Gemäß einer weiteren möglichen Ausführungsform der Erfindung ist das Übertragungsmittel jedoch ein einfachwirkender Seilzug. Dieser lässt sich flexibel insbesondere am oder unter dem Fahrzeugboden verlegen und erlaubt eine Minimierung der unerwünschten Körperschallübertragung zwischen Getriebe und Betätigungseinrichtung bzw. Wählhebelgehäuse. Mittels eines einfachwirkenden Seilzugs lässt sich die Parksperre insbesondere durch eine rein ziehende Bewegung des Seilzugs deaktivieren, wodurch zur Aufrechterhaltung der Funktion des Seilzugs auch lediglich eine minimale Seilzugvorspannung erforderlich ist, womit vorteilhaft wiederum nur entsprechend minimale Reibungsverluste anfallen.

Gemäß einer weiteren besonders bevorzugten Ausführungsform der Erfindung ist vorgesehen, dass die Koppeleinrichtung der Betätigungseinrichtung im wesentlichen symmetrisch zu einer Längsebene der Gleitführung ausgebildet ist. Dabei umfasst die Koppeleinrichtung gleichzeitig zwei bezüglich der Längsebene einander gegenläufig - im übertragungsmittelseitigen Schlittenteil - angeordnete Riegelelemente.

Vorzugsweise bildet dabei das übertragungsmittelseitige Schlittenteil im Überlappungsabschnitt mit dem betätigungsseitigen Schlittenteil eine im Wesentlichen prismatische oder gabelförmige Schlittenausnehmung. Gleichzeitig weist das betätigungsseitige Schlittenteil im Überlappungsabschnitt einen zu der Schlittenausnehmung des übertragungsmittelseitigen Schlittenteils formkorrespondierenden Vorsprung oder Zapfen auf, wobei die Riegelelemente im Bereich der prismatischen bzw. gabelförmigen Schlittenausnehmung des übertragungsmittelseitigen Schlittenteils angeordnet sind.

Mit anderen Worten bedeutet dies, dass die beiden Schlittenteile bei dieser Ausführungsform nach Art einer Stecker/Buchsen-Verbindung ausgebildet sind und ebenso ineinander eingreifen. Dabei sind vorzugsweise zwei Riegelelemente im Bereich der an die Gleitführung angrenzenden Randbereiche des übertragungsmittelseitigen Schlittenteils (welches bezüglich der Stecker/Buchsen-Analogie die Buchse darstellt) symmetrisch angeordnet. Das betätigungsseitige Schlittenteil (welches gemäß der Analogie in diesem Fall den Stecker bildet) dringt zur Kopplung mit dem übertragungsmittelseitigen Schlittenteil somit in das übertragungsmittelseitige Schlittenteil ein.

Eine weitere mögliche Ausführungsform der Erfindung sieht vor, dass die Koppeleinrichtung insgesamt bogenförmig ausgebildet und entlang eines Kreisbogens im Wesentlichen um einen Wählhebeldrehpunkt angeordnet ist. Mit anderen Worten bedeutet dies, dass sowohl die Gleitführung als auch der Koppelschlitten mit den beiden Schlittenteilen kreisbogenförmig gekrümmt ausgebildet sind, wodurch der Koppelschlitten bzw. die beiden Schlittenteile sich somit nicht mehr linear, sondern entlang einer kreisbogenförmigen Bewegungsbahn in der - in diesem Fall ebenso kreisbogenförmigen - Gleitführung bewegen können, wobei der Mittelpunkt der kreisbogenförmigen Bewegungsbahn mit dem Drehpunkt eines Wählhebels der Betätigungseinrichtung im Wesentlichen zusammenfällt.

Dank dieser Ausführungsform lassen sich die Unterschiede in den Bewegungsbahnen insbesondere des betätigungsseitigen Schlittenteils und des in das betätigungsseitige Schlittenteil eingreifenden Wählhebelendes minimieren bzw. eliminieren. Denn bei dieser Ausführungsform führen bei der Betätigung sowohl das Wählhebelende als auch der Koppelschlitten jeweils kreisbogenförmige Bewegungen mit - je nach konstruktiver Gestaltung nahezu oder exakt - identischem Radius und Mittelpunkt aus. Spiel und Relativbewegungen zwischen Wählhebelende und Koppelschlitten lassen sich auf diese Weise minimieren, und die Betätigungseinrichtung kann insgesamt noch kompakter gestaltet werden.

Im Folgenden wird die Erfindung anhand lediglich Ausführungsbeispiele darstellender Zeichnungen näher erläutert. Dabei zeigt
- **Fig. 1**: in Draufsicht die Koppeleinrichtung gemäß einer Ausführungsform der erfindungsgemäßen Betätigungseinrichtung;
- **Fig. 2**: in schematisierter Ansicht die Koppeleinrichtung gemäß **Fig. 1** mit gekoppelten Schlittenteilen;
- **Fig. 3**: in schematisierter Ansicht die Koppeleinrichtung gemäß **Fig. 2** beim beginnenden Entkoppeln der beiden Schlittenteile;
- **Fig. 4**: in schematisierter Ansicht die Koppeleinrichtung gemäß **Fig. 2** und **3** während des Entkoppelns der beiden Schlittenteile;
- **Fig. 5**: in schematisierter Ansicht die Koppeleinrichtung gemäß **Fig. 2** bis **4** mit komplett entkoppelten Schlittenteilen; und
- **Fig. 6**: in schematisierter Ansicht die Koppeleinrichtung gemäß **Fig. 2** bis **5** bei der weiteren Bewegung des betätigungsseitigen Schlittenteils.

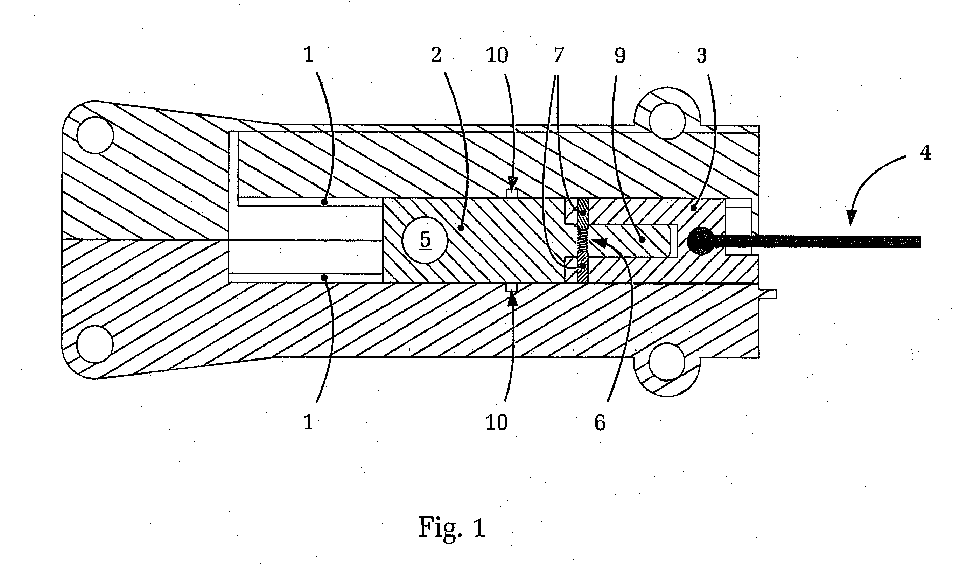

**Fig. 1** zeigt in einer Draufsicht die Koppeleinrichtung einer Ausführungsform einer erfindungsgemäßen Betätigungseinrichtung. Man erkennt zunächst eine prismatische Gleitführung 1, die fest mit einem (nicht dargestellten) Sockel oder Wählhebelgehäuse verbunden ist.

In der Gleitführung 1 ist ein Koppelschlitten 2, 3 angeordnet, der an seinem zeichnungsbezogen rechten Ende mit einem zum Getriebe führenden Seilzug 4 verbunden ist, wobei der Seilzug 4 zur Betätigung der Parksperre im Getriebe dient. Am zeichnungsbezogen linken Ende des Koppelschlittens 2, 3 befindet sich eine Aufnahme 5 für den Eingriff eines (nicht dargestellten) Betätigungselements oder Wählhebels der Betätigungseinrichtung in das zeichnungsbezogen linke, betätigungsseitige Schlittenteil 2.

Der Koppelschlitten 2, 3 besteht erfindungsgemäß aus einem betätigungsseitigen Schlittenteil 2 und einem übertragungsmittelseitigen Schlittenteil 3. Betätigungsseitiges 2 und übertragungsmittelseitiges Schlittenteil 3 sind im Zustand der Koppeleinrichtung gemäß **Fig. 1** noch fest aneinander gekoppelt. Zum Zweck der Kopplung der beiden Schlittenteile sind im übertragungsmittelseitigen Schlittenteil 3 bei der dargestellten Ausführungsform zwei gegenläufig positionierte, mittels einer (hier nur schematisch angedeuteten) Feder 6 federbelastete Riegelelemente 7 angeordnet. Der Zustand der Koppeleinrichtung gemäß **Fig. 1** sowie die Relativposition des Koppelschlittens 2, 3 innerhalb der Gleitführung 1 gemäß **Fig. 1** entspricht dabei der am Betätigungselement bzw. Wählhebel der Betätigungseinrichtung ausgewählten Parksperrenstellung.

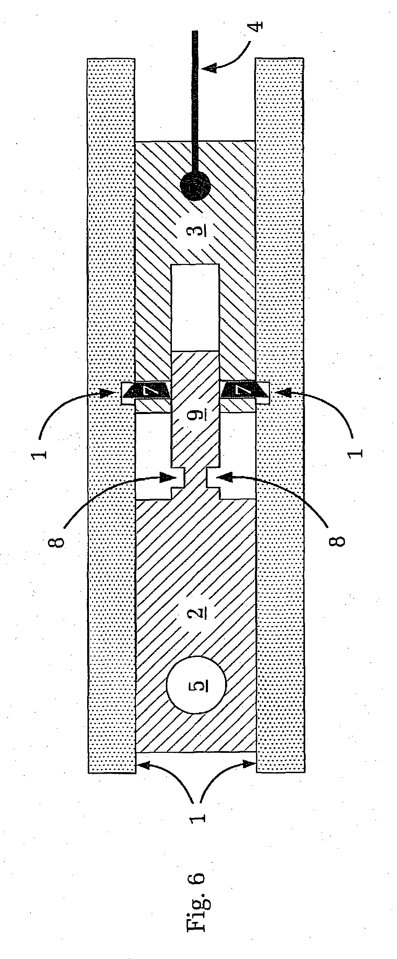

Die Riegelelemente 7 tasten mit ihren nach außen gewandten Stirnseiten die jeweiligen Innenoberflächen der Gleitführung 1 ab, während die einander zugewandten, innenseitigen Enden der Riegelelemente 7 im dargestellten, gekoppelten Zustand des Koppelschlittens 2, 3 noch in entsprechende Koppelausnehmungen 8 (vgl. **Fig. 6**) im Bereich des Koppelzapfens 9 des betätigungsseitigen Schlittenteils 3 eingreifen. Dies bedeutet, dass die beiden Schlittenteile 2, 3 mittels der Riegelelemente 7 so lange fest miteinander gekoppelt sind, wie die Riegelelemente 7 durch die Innenoberflächen der Gleitführung 1 daran gehindert werden, federbelastet nach außen zu gleiten.

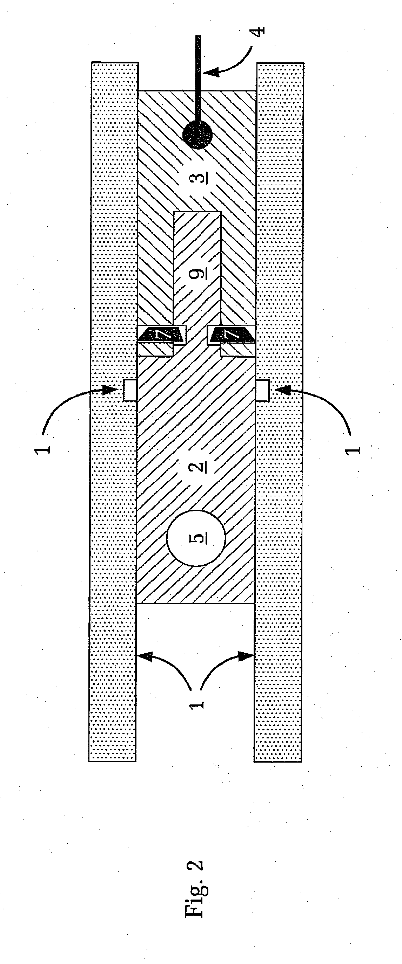

**Fig. 2** bis **6** zeigen die Kopplung der beiden Schlittenteile 2, 3 mittels der Riegelelemente 7, sowie den Ablauf der Trennung der beiden Schlittenteile 2, 3 bei einer Bewegung des Betätigungselements bzw. Wählhebels - ausgehend von der Parksperrenstellung - nochmals ausführlicher, jedoch in lediglich schematisierter Darstellung. Der Übersichtlichkeit halber ist dabei das Federelement 6 (vgl. **Fig. 1**), welches die Riegelelemente 7 nach außen in Richtung auf die Innenoberfläche 1 der Gleitführung drückt, in der Darstellung der **Fig. 2** bis **6** weggelassen.

In **Fig. 2** erkennt man, dass die beiden Schlittenteile 2, 3 mittels der beiden Riegelelemente 7 zunächst noch fest miteinander gekoppelt sind, da die Riegelelemente 7 an der Innenoberfläche 1 der Gleitführung entlang tastend geführt werden, und somit ihre die beiden Schlittenteile 2, 3 koppelnde Position im Koppelschlitten gemäß **Fig. 2** nicht verlassen können.

Wird das Betätigungselement, also beispielsweise der Wählhebel der Betätigungseinrichtung, aus der Parksperrenstellung (vgl. Schlittenstellung in **Fig. 2****)** herausbewegt, so führt dies nächst einmal zu einer Verschiebung des Koppelschlittens 2, 3 zeichnungsbezogen nach links. Dabei sind die beiden Schlittenteile 2, 3 mittels der Riegelelemente 7 gemäß **Fig. 2** zunächst auch weiterhin noch miteinander gekoppelt, so dass dementsprechend eine ziehende Betätigung des Seilzugs 4 erfolgt, wodurch wiederum die Parksperre im Getriebe deaktiviert wird.

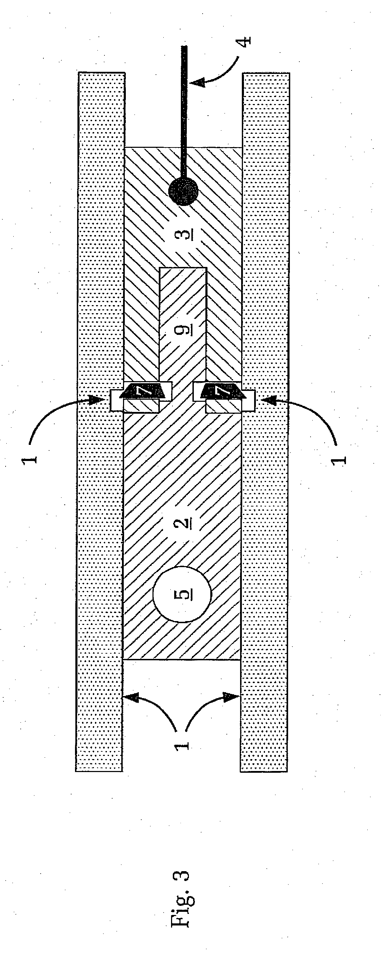

Kurz vor dem Erreichen der Wählhebelstellung "R" durch das Betätigungselement bzw. durch den Wählhebel (ausgehend von der Parksperrenstellung gemäß **Fig. 2****)** erreicht der Koppelschlitten 2, 3 anschließend die in **Fig. 3** dargestellte Relativposition in der Gleitführung 1. Hier beginnen die von dem (nicht dargestellten) Federelement 6 (gemäß **Fig. 1**) federbelastet nach außen gedrückten Riegelelemente 7 in die ihnen jeweils zugeordnete Rastvertiefung 10 in der jeweiligen Gleitführung 1 einzufahren, s. **Fig. 3****.**

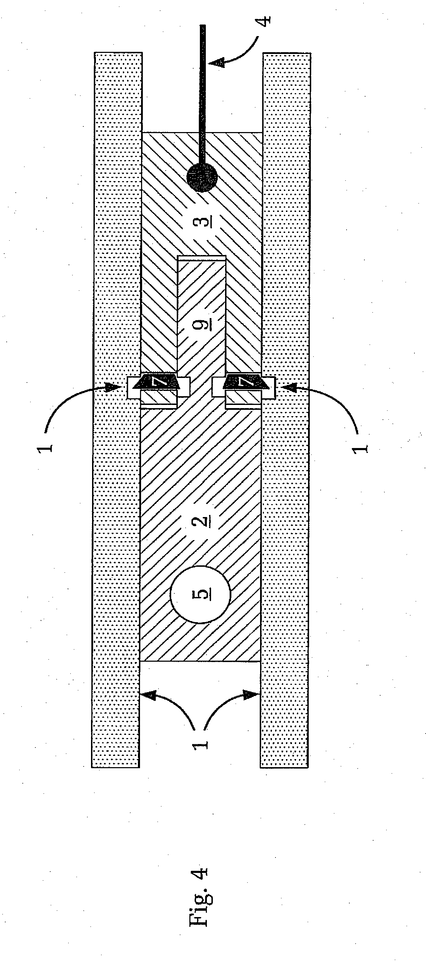

Bei der weiteren Bewegung des Koppelschlittens 2, 3 zeichnungsbezogen nach links ergibt sich sodann die Situation gemäß **Fig. 4****.** Hier beginnen sich die beiden Schlittenteile 2, 3 bereits voneinander zu trennen, wobei die weitere Bewegung der Riegelelemente 7 in die Rastvertiefungen 10 der Gleitführung 1 durch die hier beispielhaft angedeuteten Anschrägungen der Stirnseiten der Riegelelemente 7 unterstützt werden.

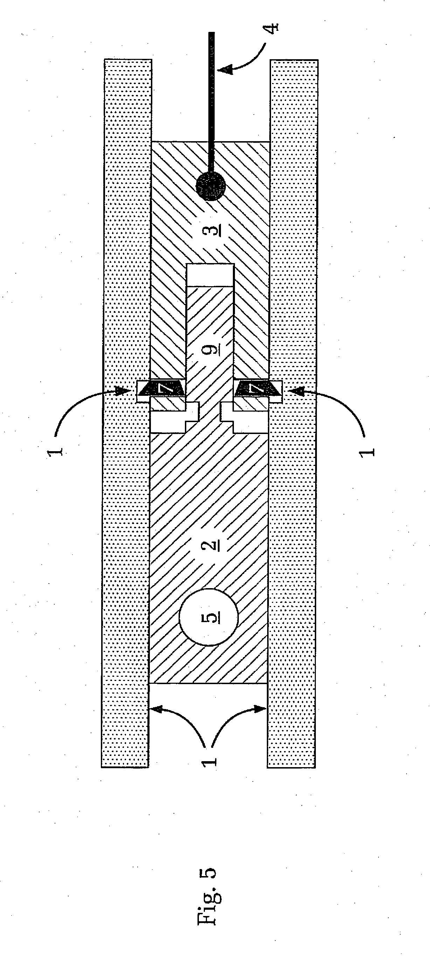

Alternativ oder zusätzlich zu den in den **Fig. 2** bis **6** dargestellten Anschrägungen der Stirnseiten der Riegelelemente 7 können auch die in Richtung des Seilzugs 4 gewandten Seitenwände der Rastvertiefungen 10 in der Gleitführung 1 und/oder der Koppelausnehmungen 8 (vgl. **Fig. 6**) im Koppelzapfen 9 des zeichnungsbezogen linken, betätigungsseitigen Schlittenteils 2 entsprechend abgeschrägt ausgebildet sein, um auf diese Weise die Bewegung der Riegelelemente 7 zwischen ihren beiden Relativstellungen gemäß **Fig. 3****,** bzw. gemäß **Fig. 5** und **6****,** in eine oder in beiden Richtungen zu unterstützen.

In der Situation gemäß **Fig. 5** befinden sich die Riegelelemente 7 in ihrer Endstellung gemäß der zweiten Relativposition der Riegelelemente 7, und die beiden Schlittenteile 2, 3 sind vollständig voneinander entkoppelt. Die weitere Bewegung des Betätigungselements bzw. Wählhebels und des damit gekoppelten zeichnungsbezogen linken Schlittenteils 2 können gemäß **Fig. 6** somit stattfinden, ohne dass dabei eine (unerwünschte) weitere Betätigung des zeichnungsbezogen rechten Schlittenteils 3 und des damit verbundenen Seilzugs 4 zum Getriebe erfolgt.

Gleichzeitig wird sowohl das seilzugseitige, rechte Schlittenteil 3 als auch der Seilzug 4 selbst durch die Riegelelemente 7 in der gemäß **Fig. 5** erreichten Relativposition in der Gleitführung 1 fixiert. Dies hängt damit zusammen, dass die Riegelelemente 7 nun gemäß **Fig. 6** in ihrer zweiten Relativposition - in welcher sie in die Rastvertiefungen 10 der Gleitführung 1 eingefahren sind - durch die Oberfläche des Koppelzapfens 9 am zeichnungsbezogen linken Schlittenteil 2 solange axial blockiert sind, bis die beiden Schlittenteile 2, 3 durch entsprechende Bewegung des Betätigungselements bzw. Wählhebels wieder zusammengeführt werden.

Bei einer solchen Bewegung des Betätigungselements bzw. Wählhebels aus einer der Fahrstufenpositionen "N", "D" usw. (vgl. Situation in **Fig. 6**) zurück in die Fahrstufenposition "R" (vgl. Situation in **Fig. 3** bzw. **4**) findet der in den **Fig. 2** bis **5** dargestellte Ablauf bei der Entkopplung der beiden Schlittenteile 2, 3 analog statt, lediglich in der umgekehrten Reihenfolge. Die Rückführung der Riegelelemente 7 aus ihrer zweiten Relativstellung in den Rastvertiefungen 10 der Gleitführung 1 (vgl. **Fig. 5** bzw. **6)** in ihre erste Relativstellung gemäß **Fig. 2** erfolgt dabei über die Abschrägung der gleitführungsseitigen Stirnseiten der Riegelelemente 7, wodurch gleichzeitig die Federkraft des (hier nicht dargestellten) Federelements 6 (vgl. **Fig. 1**) überwunden, und das Federelement 6 wieder gespannt wird.

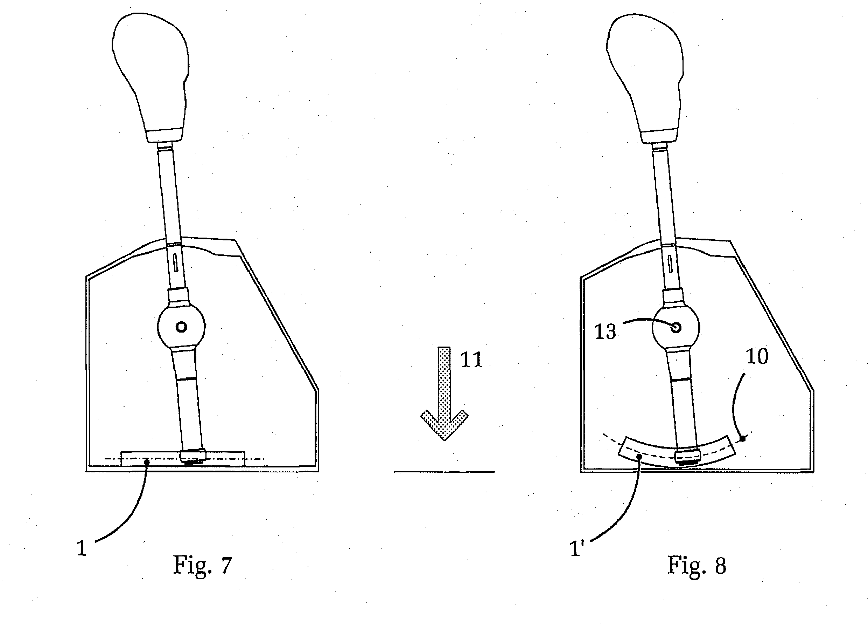

In den **Fig. 7** und **8** sind - lediglich höchst schematisch und unter vereinfachender Vernachlässigung der Schaltschemata - zwei unterschiedliche, von der Erfindung grundsätzlich umfasste Möglichkeiten zur Anordnung bzw. Ausbildung der erfindungsgemäßen Koppeleinrichtung dargestellt. Der Pfeil 11 versinnbildlicht hierbei die Blickrichtung auf die Papierebene der Darstellungen gemäß **Fig. 1** bis **6****.**

Die Variante der Koppeleinrichtung gemäß **Fig. 7** umfasst eine linear ausgebildete Gleitführung 1 zur Aufnahme des Koppelschlittens bzw. der Schlittenteile 2, 3 (vgl. **Fig. 1** bis **6**), während die Gleitführung 1' gemäß **Fig. 8** bogenförmig ausgebildet ist und entlang eines Kreisbogens 10 verläuft, dessen Mittelpunkt im Wesentlichen mit dem Wählhebeldrehpunkt 13 zusammenfällt. Bei der Variante gemäß **Fig. 8** ist somit die gesamte Koppeleinrichtung - insbesondere die Gleitführung 1' sowie der Koppelschlitten 2, 3 - dementsprechend kreisbogenförmig gekrümmt ausgebildet. Hierdurch lassen sich Relativbewegungen und Spiel im Bereich des Wählhebeleingriffs in den Koppelschlitten verringern oder eliminieren, und zudem ergeben sich Möglichkeiten für eine besonders kompakte konstruktive Ausführung der Betätigungseinrichtung.

Im Ergebnis wird somit deutlich, dass mit der Erfindung eine Betätigungseinrichtung geschaffen wird, bei der die Übertragungsmechanik zur Betätigung des Übertragungsmittels bzw. Seilzugs - selektiv nur beim Schalten aus der bzw. in die Wählhebelstellung "P" - konstruktiv besonders einfach, kostengünstig und gleichzeitig Platz sparend und robust ausgeführt werden kann. Insgesamt ergibt sich dank der Erfindung eine zuverlässige, leichtgängige und geräuscharme Ausführung der mechanischen Parksperrenbetätigung.

### Bezugszeichenliste

- 1: Gleitführung, Führungsoberfläche
- 2, 3: Koppelschlitten, Schlittenteile
- 4: Seilzug
- 5: Betätigungseingriff
- 6: Federelement
- 7: Riegelelement
- 8: Koppelausnehmung
- 9: Koppelzapfen
- 10: Rastvertiefung
- 11: Blickrichtung
- 12: Kreisbogen
- 13: Wählhebeldrehpunkt

## Patentansprüche

1. Betätigungseinrichtung zur Auswahl von Schaltstufen eines shift-by-wire-Gangwechselgetriebes, die Betätigungseinrichtung umfassend ein entlang zumindest einer Schaltgasse zwischen zumindest einer Parksperrenstellung und einer Fahrstufenstellung bewegbares Betätigungselement, ein mechanisches Übertragungsmittel (4) zum Getriebe für die Parksperrenbetätigung, sowie eine zwischen Betätigungselement und Übertragungsmittel (4) angeordnete Koppeleinrichtung, wobei die Koppeleinrichtung zur selektiven Betätigung des Übertragungsmittels (4) nur bei der An- bzw. Abwahl der Parksperrenstellung am Betätigungselement eingerichtet ist,
**dadurch gekennzeichnet,**
**dass** die Koppeleinrichtung eine im Wesentlichen prismatische Gleitführung (1) mit einer Rastvertiefung (10) und einen in der Gleitführung (1) verschieblich gelagerten, in einen betätigungsseitigen Schlittenteil (2) und einen übertragungsmittelseitigen Schlittenteil (3) zweigeteilten Koppelschlitten (2, 3) umfasst, wobei betätigungsseitiger Schlittenteil (2) und übertragungsmittelseitiger Schlittenteil (3) einander in ihrer Koppelstellung in einem Überlappungsabschnitt in führungsaxialer Richtung überlappen, wobei im übertragungsmittelseitigen Schlittenteil (3) im Überlappungsabschnitt ein quer zur Gleitführung (1) beweglich gelagertes, die Gleitführung (1) und die Rastvertiefung (10) abtastendes Riegelelement (7) angeordnet ist, wobei das Riegelelement (7) bei Bewegung des Koppelschlittens (2, 3) aus einer ersten Relativposition, in welcher beide Schlittenteile (2, 3) mittels Eingriff des Riegelelements (7) in beide Schlittenteile (2, 3) aneinander gekoppelt sind, durch Abtastung der Rastvertiefung (10) in eine nicht selbsthemmende zweite Relativposition bewegbar ist, in welcher der Eingriff des Riegelelements (7) in das betätigungsseitige Schlittenteil (2) aufgehoben ist.

2. Betätigungseinrichtung nach Anspruch 1,
**dadurch gekennzeichnet,**
**dass** das das Riegelelement (7) in seiner zweiten Relativposition mittels Eingriff in die Rastvertiefung (10) der Gleitführung (1) das übertragungsmittelseitige Schlittenteil (3) in der Gleitführung (1) axial fixiert.

3. Betätigungseinrichtung nach Anspruch 1 oder 2,
**dadurch gekennzeichnet,**
**dass** das Riegelelement (7) durch eine Oberfläche des betätigungsseitigen Schlittenteils (2) in seiner zweiten Relativposition blockiert ist, wenn sich die beiden Schlittenteile (2, 3) in einer nicht gekoppelten, bezüglich ihrer Koppelstellung voneinander entfernten Relativstellung befinden.

4. Betätigungseinrichtung nach einem der Ansprüche 1 bis 3,
**dadurch gekennzeichnet,**
**dass** das Riegelelement (7) als im Wesentlichen zylindrischer Stift ausgebildet ist.

5. Betätigungseinrichtung nach einem der Ansprüche 1 bis 4,
**dadurch gekennzeichnet,**
**dass** das Riegelelement (7) in Richtung auf die Oberfläche der Gleitführung (1) federbelastet (6) ist.

6. Betätigungseinrichtung nach einem der Ansprüche 1 bis 5,
**dadurch gekennzeichnet,**
**dass** das Riegelelement (7) im Bereich seines in die Rastvertiefung (10) eingreifenden Endes übertragungsmittelseitig eine Abschrägung zur Rückführung des Riegelelements (7) in seine erste Relativposition bei Bewegung des übertragungsmittelseitigen Schlittenteils (3) mit dem darin gelagerten Riegelelement (7) in Richtung auf das Übertragungsmittel aufweist.

7. Betätigungseinrichtung nach einem der Ansprüche 1 bis 6,
**dadurch gekennzeichnet,**
**dass** die Rastvertiefung (10) übertragungsmittelseitig eine Abschrägung zur Rückführung des Riegelelements (7) in seine erste Relativposition bei Bewegung des übertragungsmittelseitigen Schlittenteils (3) mit dem darin gelagerten Riegelelement (7) in Richtung auf das Übertragungsmittel aufweist.

8. Betätigungseinrichtung nach einem der Ansprüche 1 bis 7,
**dadurch gekennzeichnet,**
**dass** das Riegelelement (7) und/oder die Koppelausnehmung (8) des betätigungsseitigen Schlittenteils (2) im Bereich des in die Koppelausnehmung (8) eingreifenden Endes des Riegelelements (7) übertragungsmittelseitig eine Abschrägung zur Unterstützung der Bewegung des Riegelelements (7) aus seiner ersten in seine zweite Relativposition aufweist.

9. Betätigungseinrichtung nach einem der Ansprüche 1 bis 8,
**dadurch gekennzeichnet,**
**dass** das Übertragungsmittel (4) ein einfachwirkender Seilzug ist.

10. Betätigungseinrichtung nach einem der Ansprüche 1 bis 9,
**dadurch gekennzeichnet,**
**dass** die Koppeleinrichtung im Wesentlichen symmetrisch zu einer Längsebene der Gleitführung (1) ausgebildet ist und zwei einander gegenläufig angeordnete Riegelelemente (7) umfasst.

11. Betätigungseinrichtung nach Anspruch 10,
**dadurch gekennzeichnet,**
**dass** das übertragungsmittelseitige Schlittenteil (3) im Überlappungsabschnitt mit dem betätigungsseitigen Schlittenteil (2) eine im Wesentlichen prismatische oder gabelförmige Schlittenausnehmung und das betätigungsseitige Schlittenteil (2) im Überlappungsabschnitt einen zu der Schlittenausnehmung formkorrespondierenden Vorsprung (9) aufweist, wobei die Riegelelemente (7) im Bereich der Schlittenausnehmung des übertragungsmittelseitigen Schlittenteils (3) angeordnet sind.

12. Betätigungseinrichtung nach einem der Ansprüche 1 bis 11,
**dadurch gekennzeichnet,**
**dass** die Koppeleinrichtung bogenförmig ausgebildet und entlang eines Kreisbogens (12) um einen Wählhebeldrehpunkt (13) angeordnet ist.

## Claims

1. Actuation device for the selection of shift steps of a shift-by-wire gear-change transmission, the actuation device comprising an actuation element movable along at least one shift gate slot between at least one parking lock position and a running-step position, a mechanical transfer means (4) for the transmission for the parking lock actuation, and a coupling device arranged between actuation element and transfer means (4), the coupling device being designed for the selective actuation of the transfer means (4) solely upon the selection or deselection of the parking lock position on the actuation element,
**characterized**
**in that** the coupling device comprises an essentially prismatic sliding guide (1) with a latching depression (10) and a coupling slide (2, 3) mounted displaceably in the sliding guide (1) and divided in two into an actuation-side slide part (2) and a transfer-means-side slide part (3), the actuation-side slide part (2) and transfer-means-side slide part (3) overlapping one another in their coupling position in an overlap portion in the axial direction of guidance, and there being arranged in the transfer-means-side slide part (3), in the overlap portion, a locking element (7) which is mounted so as to be movable transversely to the sliding guide (1) and which senses the sliding guide (1) and the latching depression (10), and, upon the movement of the coupling slide (2, 3) out of a first relative position, in which the two slide parts (2, 3) are coupled to one another by use of engagement of the locking element (7) into both slide parts (2, 3), the locking element (7) being movable as a result of the sensing of the latching depression (10) into a non-self-locking second relative position in which the engagement of the locking element (7) into the actuation-side slide part (2) is cancelled.

2. Actuation device according to Claim 1,
**characterized**
**in that** the locking element (7), in its second relative position, fixes the transfer-means-side slide part (3) axially in the sliding guide (1) by use of engagement into the latching depression (10) of the sliding guide (1).

3. Actuation device according to Claim 1 or 2,
**characterized**
**in that** the locking element (7) is blocked in its second relative position by a surface of the actuation-side slide part (2) when the two slide parts (2, 3) are in a non-coupled relative position in which they are remote from one another with respect to their coupling position.

4. Actuation device according to one of Claims 1 to 3,
**characterized**
**in that** the locking element (7) is formed as an essentially cylindrical pin.

5. Actuation device according to one of Claims 1 to 4,
**characterized**
**in that** the locking element (7) is spring-loaded (6) in the direction towards the surface of the sliding guide (1).

6. Actuation device according to one of Claims 1 to 5,
**characterized**
**in that** the locking element (7) has on the transfer-means side, in the region of its end engaging into the latching depression (10), a bevel for the return of the locking element (7) into its first relative position upon the movement of the transfer-means-side slide part (3), together with the locking element (7) mounted therein, in the direction towards the transfer means.

7. Actuation device according to one of Claims 1 to 6,
**characterized**
**in that** the latching depression (10) has, on the transfer-means side, a bevel for the return of the locking element (7) into its first relative position upon the movement of the transfer-means-side slide part (3), together with the locking element (7) mounted therein, in the direction towards the transfer means.

8. Actuation device according to one of Claims 1 to 7,
**characterized**
**in that** the locking element (7) and/or the coupling recess (8) of the actuation-side slide part (2) has on the transfer-means-side, in the region of that end of the locking element (7) which engages into the coupling recess (8), a bevel for assisting the movement of the locking element (7) out of its first relative position into its second.

9. Actuation device according to one of Claims 1 to 8,
**characterized**
**in that** the transfer means (4) is a single-acting cable pull control.

10. Actuation device according to one of Claims 1 to 9,
**characterized**
**in that** the coupling device is formed essentially symmetrically to a longitudinal plane of the sliding guide (1) and comprises two locking elements (7) arranged contradirectionally to one another.

11. Actuation device according to Claim 10,
**characterized**
**in that** the transfer-means-side slide part (3) has, in the overlap portion with the actuation-side slide part (2), an essentially prismatic or fork-shaped slide recess, and the actuation-side slide part (2) has, in the overlap portion, a projection (9) matching in form with the slide recess, the locking elements (7) being arranged in the region of the slide recess of the transfer-means-side slide part (3).

12. Actuation device according to one of Claims 1 to 11,
**characterized**
**in that** the coupling device is of arcuate form and is arranged along an arcuate circle (12) about a selector-lever fulcrum (13).

## Revendications

1. Dispositif d'actionnement pour la sélection de rapports de changement de vitesses d'une boîte de vitesses de type shift-by-wire, le dispositif d'actionnement comportant un élément d'actionnement pouvant être déplacé le long d'au moins une voie de changement de vitesses entre au moins une position de verrouillage de stationnement et une position de rapport de conduite, un moyen de transmission mécanique (4) vers la transmission pour l'actionnement du verrouillage de stationnement, ainsi qu'un dispositif d'accouplement disposé entre l'élément d'actionnement et le moyen de transmission (4), le dispositif d'accouplement étant conçu pour l'actionnement sélectif du moyen de transmission (4) uniquement lors de la sélection ou de la désélection de la position de verrouillage de stationnement sur l'élément d'actionnement,
**caractérisé en ce que**
le dispositif d'accouplement comporte une glissière (1) essentiellement prismatique comprenant un évidement d'encliquetage (10) et un coulisseau d'accouplement (2, 3) monté mobile dans la glissière (1) et divisé en une partie de coulisseau (2) située côté actionnement et une partie de coulisseau (3) située du côté du moyen de transmission, la partie de coulisseau (2) située côté actionnement et la partie de coulisseau (3) située du côté du moyen de transmission se chevauchant l'une l'autre, dans leur position d'accouplement, dans une portion de chevauchement dans la direction de guidage axial, un élément de verrouillage (7) monté mobile transversalement à la glissière (1) et balayant la glissière (1) et l'évidement d'encliquetage (10) étant disposé dans la partie de coulisseau (3) située du côté du moyen de transmission, dans la portion de chevauchement, l'élément de verrouillage (7) pouvant être déplacé, lors du déplacement du coulisseau d'accouplement (2, 3), à partir d'une première position relative, dans laquelle les deux parties de coulisseau (2, 3) sont accouplées l'une à l'autre par entrée en prise de l'élément de verrouillage (7) dans les deux parties de coulisseau (2, 3), par balayage de l'évidement d'encliquetage (10), dans une deuxième position relative non autobloquante dans laquelle l'entrée en prise de l'élément de verrouillage (7) dans la partie de coulisseau (2) située côté actionnement est supprimée.

2. Dispositif d'actionnement selon la revendication 1,
**caractérisé en ce que,**
dans sa deuxième position relative, l'élément de verrouillage (7) fixe axialement la partie de coulisseau (3) située du côté du moyen de transmission dans la glissière (1) par entrée en prise dans l'évidement d'encliquetage (10) de la glissière (1).

3. Dispositif d'actionnement selon la revendication 1 ou 2,
**caractérisé en ce que**
l'élément de verrouillage (7) est bloqué dans sa deuxième position relative par une surface de la partie de coulisseau (2) située côté actionnement lorsque les deux parties de coulisseau (2, 3) se trouvent dans une position relative non accouplée et éloignée l'une de l'autre par rapport à leur position d'accouplement.

4. Dispositif d'actionnement selon l'une quelconque des revendications 1 à 3,
**caractérisé en ce que**
l'élément de verrouillage (7) est réalisé sous forme de goupille essentiellement cylindrique.

5. Dispositif d'actionnement selon l'une quelconque des revendications 1 à 4,
**caractérisé en ce que**
l'élément de verrouillage (7) est sollicité par ressort (6) en direction de la surface de la glissière (1).

6. Dispositif d'actionnement selon l'une quelconque des revendications 1 à 5,
**caractérisé en ce que**
l'élément de verrouillage (7) comprend, dans la région de son extrémité en prise dans l'évidement d'encliquetage (10), du côté du moyen de transmission, un chanfrein pour le retour de l'élément de verrouillage (7) à sa première position relative lors du déplacement, en direction du moyen de transmission, de la partie de coulisseau (3) située du côté du moyen de transmission avec l'élément de verrouillage (7) logé dans celle-ci.

7. Dispositif d'actionnement selon l'une quelconque des revendications 1 à 6,
**caractérisé en ce que**
l'évidement d'encliquetage (10) comprend, du côté du moyen de transmission, un chanfrein pour le retour de l'élément de verrouillage (7) à sa première position relative lors du déplacement, en direction du moyen de transmission, de la partie de coulisseau (3) située du côté du moyen de transmission avec l'élément de verrouillage (7) logé dans celle-ci.

8. Dispositif d'actionnement selon l'une quelconque des revendications 1 à 7,
**caractérisé en ce que**
l'élément de verrouillage (7) et/ou l'évidement d'accouplement (8) de la partie de coulisseau (2) située côté actionnement comprend/comprennent, dans la région de l'extrémité de l'élément de verrouillage (7) en prise dans l'évidement d'accouplement (8), du côté du moyen de transmission, un chanfrein pour assister le déplacement de l'élément de verrouillage (7) à partir de sa première position relative jusqu'à sa deuxième position relative.

9. Dispositif d'actionnement selon l'une quelconque des revendications 1 à 8,
**caractérisé en ce que**
le moyen de transmission (4) est un câble Bowden à action simple.

10. Dispositif d'actionnement selon l'une quelconque des revendications 1 à 9,
**caractérisé en ce que**
le dispositif d'accouplement est réalisé essentiellement de manière symétrique par rapport à un plan longitudinal de la glissière (1) et comporte deux éléments de verrouillage (7) disposés de manière opposée l'un à l'autre.

11. Dispositif d'actionnement selon la revendication 10,
**caractérisé en ce que**
la partie de coulisseau (3) située du côté du moyen de transmission comprend, dans la portion de chevauchement avec la partie de coulisseau (2) située côté actionnement, un évidement de coulisseau essentiellement prismatique ou en forme de fourche, et la partie de coulisseau (2) située côté actionnement comprend, dans la portion de chevauchement, une saillie (9) dont la forme correspond à celle de l'évidement de coulisseau, les éléments de verrouillage (7) étant disposés dans la région de l'évidement de coulisseau de la partie de coulisseau (3) située du côté du moyen de transmission.

12. Dispositif d'actionnement selon l'une quelconque des revendications 1 à 11,
**caractérisé en ce que**
le dispositif d'accouplement est réalisé en forme d'arc et est disposé le long d'un arc de cercle (12) autour d'un centre de rotation de levier sélecteur (13).
